# EUROPÄISCHE PATENTSCHRIFT

(11) **EP 2 236 882 B1**
(45) Veröffentlichungstag und Bekanntmachung des Hinweises auf die Patenterteilung: **24.06.2015**
(21) Anmeldenummer: 10002982.6
(22) Anmeldetag: 22.03.2010
(51) Int. Cl.: F16K 31/06

(54) **Elektromagnetventil**
Electromagnetic valve
Soupape électromagnétique.

(30) Priorität: 01.04.2009 HU 0900196
(43) Veröffentlichungstag der Anmeldung: 06.10.2010
(73) Patentinhaber: FESTO AG & Co. KG, 73734 Esslingen (DE)
(72) Erfinder: Bertalan, Barnabás, 2092 Budakeszi (HU); Urbán, József, 1022 Budapest (HU)
(74) Vertreter: Patentanwälte Magenbauer & Kollegen Partnerschaft mbB

(56) Entgegenhaltungen:
- EP-A1- 1 806 526
- EP-A2- 0 418 502
- EP-A2- 1 962 299
- WO-A1-2006/078138
- DE-A1- 2 504 521
- DE-A1- 2 638 393
- DE-A1- 2 826 973
- NL-C- 12 491
- US-B1- 6 701 959

## Beschreibung

Die Erfindung betrifft ein elektromagnetisch betätigbares Magnetventil gemäß den Oberbegriffen des Anspruchs 1 und des Anspruchs 3.

Elektromagnetisch betätigbare Magnetventile enthalten bekannterweise ein oder mehrere Ventilglieder, die den Weg eines durchströmenden Mediums absperren, freimachen oder verändern. Wie aus der Praxis bekannt, wird in die Endfläche an einem Ende des Ankers des Elektromagneten eine als eine Schließfläche wirkende, meistens aus Kunststoff hergestellte Sperrscheibe eingelassen, die durch eine Feder oder ein aus mehreren Federn zusammengebautes Federsystem auf einen Dichtsitz gedrückt wird. Das Ventilglied - gegebenenfalls der Anker selbst - setzt sich mit seiner Schließfläche auf die Öffnung des zugehörigen Druckmedium-Kanals und verdeckt die Öffnung. Infolge der Betriebsumstände und Betriebsverhältnisse der Magnetventile kommt es bei den Ventilen dieses Typs oft zu Störungen, die die Lebensdauer und den wartungsfreien Lebenszyklus solcher Ventile beträchtlich senken.

Die EP 1 806 526 B1 offenbart ein elektromagnetisch betätigbares Magnetventil, bei dem die oben geschilderten Nachteile zum Teil bereits umgangen sind. Als Hauptmerkmal dieses Magnetventils kann hervorgehoben werden, dass der Weg eines Hochdruckmediums nicht einfach durch Abdecken einer Öffnung abgesperrt wird, sondern das Magnetventil eine solche Schließfläche enthält, die in den Einlasskanal (oder Auslasskanal) im Laufe des Schließvorganges eintaucht und in der Schließstellung im Mündungsbereich des jeweiligen Kanals ruht. Dadurch wirkt der Druck des fluidischen Mediums in der Schließstellung des Ventils nicht in der Bewegungsrichtung des Ventilglieds sondern senkrecht oder beinahe senkrecht zu der Bewegungsrichtung des Ventilglieds, genauer gesagt zu der Schließfläche des Ventilglieds, wodurch die Betätigung des Ventilglieds bzw. dessen Halten in der geöffneten oder geschlossenen Stellung wesentlich niedrigere Kraft und Energie benötigt. Ein die Schließfläche aufweisender zylindrischer Zapfen ist entweder am Anker, an den Enden des Ankers selbst ausgebildet oder ist dem Anker zugeordnet bzw. am Anker befestigt.

Das Ventilglied erfährt im Betrieb eine elektromagnetische Betätigung, wobei die Bewegung des Ventilglieds aus seiner Offenstellung in seine Schließstellung oder umgekehrt durch den Antrieb eines Ankers erfolgt. Das Ventilglied ist meistens bezüglich dem Anker koaxial angeordnet, derart, dass es in mit dem Anker fest verbundener Art in eine innere Bohrung oder einen inneren Kanal des Ankers eingelassen ist, sodass die Bewegung des Ventilglieds in der Praxis mit der Geschwindigkeit und dem Ausmaß der Bewegung des Ankers übereinstimmt.

Die geschilderte Ausbildung der Schließfläche, ferner die mit dem Anker in fest vorgegebenen Maß zusammenhängende Lage und Bewegung des Ventilglieds bewirken aber, dass das Ventilglied nicht unter allen Umständen dazu geeignet ist, sich jedes Mal präzise und ausschließlich in Richtung seiner Längsachse - die zugleich die Längsachse des Dichtsitzes des Einlasskanals, des Auslasskanals oder des Ablasskanals bildet - zu bewegen. Wie erwähnt, taucht ein zylindrischer zapfenförmiger Teil der Schließfläche im Laufe des Schließvorganges in die Mündung des Dichtsitzes ein, was mit sich bringt, dass, wenn das Ventilglied und der Dichtsitz nicht vollkommen koaxial ausgerichtet sind, das als Schließfläche dienende Ende des Ventilglieds während der Schließbewegung weniger oder mehr an die Wand des Dichtsitzes oder an die in den Dichtsitz eingesetzte Dichtung anstößt und damit zum Verschleiß oder zur Beschädigung der genannten Elemente beiträgt, wenn auch erst nach längerem Gebrauch und zahlreichen Schließvorgängen. Das hat auch zur Folge, dass die Schließfläche des Ventilglieds nicht tief genug in den Dichtsitz eintauchen kann, um dort einen dichten Abschluss zu gewährleisten. Das Magnetventil beginnt durchlässig zu werden, die Absperrung ist nicht mehr perfekt. Diese Wirkung ist unter anderem durch die nicht konstante radiale Lage des im Inneren des Elektromagneten mit gewissem Spiel angeordneten Ankers, ferner durch die radiale Bewegung des mit dem Anker in Zwangsverbindung stehenden und dennoch eine geringfügige relative Bewegung ausführenden Ventilglieds, sowie durch jenes Bauteil verursacht, das meistens als Federelement ausgeführt ist und die Aufgabe hat, nach Beendigung der Erregung des Elektromagneten den Anker und das Ventilglied in ihre Ruhestellungen zurückzustellen und das Eintauchen der Schließfläche in den Dichtsitz auf diese Weise hervorzurufen.

Die oben aufgeführten, bekannten Nachteile bewirken eine begrenzte Lebensdauer des Magnetventils. Das Ventil kann ferner ohne aufwendige Wartungsarbeiten wesentlich weniger Schaltzyklen absolvieren als es der Vorrichtung auf Grund der verwendeten Bauteile eigentlich zumutbar wäre.

Damit die Schließfläche keine Rillen, Vertiefungen, Abrieb, usw. in bzw. an der in den Dichtsitz eingelassenen Dichtung verursacht, erfordert die koaxiale Betätigung des Ankers und des Ventilglieds eine präzise Zwangsführung und ausgereifte Fertigungstechnik. Die angestrebte hohe Lebensdauer erfordert eine hochpräzise Fertigung. Das gleiche Problem kommt im Zusammenhang mit der Gewährleistung der koaxialen Anordnung der Längsachse der Durchgangsöffnung der elastischen Dichtung, d.h. des Mittelpunktes der Symmetrie, und der Symmetrieachse der Schließfläche (Schließzapfen) des Ventilglieds im Betrieb zum Vorschein, wenn letzteres, wie oben schon dargestellt, in irgend einer Weise am Anker befestigt ist.

Die DE 26 38 393 A1 offenbart ein Magnetventil nach dem Oberbegriff des Anspruches 1, dessen Ventilglied aus einem als Gummikörper gestalteten Formstück besteht, das axial bewegbar in einem einen Anker des Magnetventils bildenden zylindrischen Körper aufgenommen ist und das an zwei Ventilsitze axial andrückbar ist.

Aus der EP 1 962 299 A2 ist ein elektropneumatisches Patronenventil bekannt, das ein bewegliches Verschlusselement aufweist, das stirnseitig an einem Anker anliegt und durch den Anker an einen axialen Ventilsitz andrückbar ist.

Die US 6,701,959 offenbart ein Magnetventil nach dem Oberbegriff des Anspruchs 3.

Ziel der Erfindung ist es, ein Magnetventil der eingangs genannten Art zu schaffen, durch das gewährleistet werden kann, dass das Ventilglied, bevorzugt die Schließfläche eines in der Beschreibung des Standes der Technik dargelegten elektromagnetisch betätigbaren Magnetventils, die jeweilige Dichtfläche des das fluidische Druckmedium führenden Einlasskanals und/oder Auslasskanals und/oder Abblaskanals derart dichtend abschließt, dass keine vorzeitige Abnutzung, Aufprall oder Betriebsstörungen auftreten können.

Als weiteres Ziel kann eine kostengünstige Fertigung des Magnetventils genannt werden, die minimalen fertigungstechnischen Aufwand erfordert.

Die gestellte Aufgabe wird durch die Merkmale der kennzeichnenden Teile des Anspruchs 1 und des Anspruchs 3 gelöst.

Vorteilhafte Weiterbildungen der Erfindung gehen aus den Unteransprüchen hervor.

Es wurde erkannt, dass Betriebsstörungen größtenteils dadurch zustande kommen, dass die bekannten und bisher eingesetzten Ventilglieder gemäß EP 1 816 526 B1 über keine benötigte radiale Freiheit verfügen, unabhängig davon, wie die Kanäle gedrosselt bzw. geschlossen werden. Es wurde ferner erkannt, dass die aufgeführte Mängel beseitigt werden können, indem das Ventilglied bewegt wird, ohne es mit dem Anker zu verbinden oder an dem Anker auszubilden und indem das Ventilglied bezüglich dem Anker auch zumindest geringfügig radial beweglich ist, so dass es sich unabhängig vom Anker bezüglich des mit ihm in der Schließstellung kooperierenden Dichtsitzes rechtwinkelig zur Längsachse des Ankers ausrichten kann.

Das Magnetventil ist mittels eines Elektromagneten betätigt. Wenn der Elektromagnet erregt wird, gelang der Anker des Elektromagneten infolge der beinahe mit Lichtgeschwindigkeit erzeugten Feldstärke früher in seine zweite Endstellung als das unter strömungstechnischem Einfluss stehende und belastete Ventilglied. Diese Tatsache wird dafür genutzt, das in der Strömung frei schwimmende Ventilglied in ungehinderter Weise, beinahe schwebend in den Dichtsitz bzw. dessen Dichtfläche einzuführen, und zwar zu einem Zeitpunkt, wenn der Anker seine zweite Endstellung, die Arbeitsteilung, bereits eingenommen hat. Das Ventilglied wird somit im wesentlichen mittels der Strömung in die gewünschte Stellung gefördert. Der in seine Arbeitstellung gewechselte Anker ermöglicht dieses Ergebnis lediglich, verursacht es aber nicht unmittelbar. Da-durch wird bewerkstelligt, dass das Ende, d.h. die Schließfläche des Ventilglieds, jedes Mal frei und ungehindert, ohne irgendeine Zwangsbewegung oder Zwangslage, in die Dichtfläche eintaucht.

Es ist aus der Physik bekannt, dass ein in eine beinahe oder überwiegend laminare Strömung gelegter Körper sich, von seiner Masse und der Geschwindigkeit der Strömung beeinflusst, immer auf die Mittellinie der Strömung ausrichtet bzw. entlang der Mittellinie bewegt, da das strömende Medium sich an der Stelle mit dem niedrigsten Widerstand, also in der Mittellinie der Strömung, mit höchster Geschwindigkeit bewegt. An derselben Stelle wirkt auch die durch die zweite Potenz der Geschwindigkeit bedingte höchste dynamische Kraft auf den in die Strömung eingelegten Körper. Durch die Kombination dieses Wissens mit dem oben geschilderten Umstand, nämlich, dass bei der Betätigung des Elektromagneten der Anker infolge der beinahe mit Lichtgeschwindigkeit erzeugten Feldstärke immer früher in seine zweite Endstellung gerät als das unter strömungstechnischem Einfluss stehende, die Strömung unterbrechende oder zulassende, umschaltende Ventilglied, wird erfindungsgemäß bewirkt, dass das freie, nicht unter mechanischer Einwirkung stehende Ende des Ventilglieds frei und ausschließlich mittels der Strömung in die Mitte des Dichtsitzes eingeführt wird. Dadurch wird erreicht, dass eine freie Fläche an dem zweiten, anderen Ende des an seinem ersten Ende beaufschlagten und angeschobenen Ventilglieds ohne irgendeine Zwangseinwirkung, nur mit Hilfe der Strömung des Hochdruckmediums "durch sich selbst" in den Dichtsitz eindringt bzw. einsinkt, da die Schließfläche des Dichtsitzes sich genau in der Mitte des über den Dichtsitz strömenden Hochdruckmediums befindet.

Während eines Schließvorganges versucht der Anker, der sich zweckmäßigerweise infolge der Krafteinwirkung einer Rückstellfeder in seine Ruhestellung zurückbewegt, das Ventilglied durch Einwirkung auf dasjenige Ende in seine den Einlasskanal abschließende Ruhestellung zurückzubewegen, das mit derjenigen Schließfläche versehen ist, die insbesondere in der Gestalt eines zylindrischen Zapfens bisher die Mündung, genauer gesagt den Dichtsitz des Abblaskanals abgeschlossen hielt. Das hat zur Folge, dass das entgegengesetzte andere Ende des Ventilgliedes und die dort ausgebildete Schließfläche des Ventilglieds durch die Strömung des Hochdruckmediums - wobei der Druck der Strömung sich infolge des sich verändernden Querschnitts zeitlich ebenso verändert - in die Mittellinie der Strömung gelenkt bzw. dort gehalten wird (ähnlich wie ein in den Wasserstrahl eines Springbrunnens gesetzter Pingpongball aufschwimmt und oben mittig auf dem Wasserstrahl sitzen bleibt), und mit hoher Genauigkeit in den elastischen Dichtsitz eingeführt wird. Das eine, vom Anker angestoßene Ende des Ventilglieds ist abgestützt, das andere, radial frei bewegbare Ende des Ventilglieds stellt sich frei und ungehindert in die gewünschte Stellung gegen die Strömung und schließt den Dichtsitz des Einlasskanals nach dem Abschalten der Betätigung des Elektromagnets, d.h. nach dem Zusammenbruch des magnetischen Flusses ab.

Es ist ersichtlich, dass dank den obigen Maßnahmen die eine oder mehreren Schließfläche(n) des Ventilglieds die Mündung der Bohrung des Dichtsitzes zentrisch und schwebend, ohne irgendeine Zwangsbetätigung absperrt bzw. absperren, wodurch sichergestellt ist, dass keine radiale Kräfte auf die eine oder mehreren Schließfläche(n) des Ventilglieds einwirken. Die betreffende Schließfläche weicht in keine radiale Richtung aus und prallt nicht gegen die Wand des Dichtsitzes, sodass selbige nicht beschädigt wird und nicht verschleißt. Durch diese Maßnahmen ist ein neuartiges Magnetventil geschaffen, das gegenüber den vorbekannten zwangsgeführten Ventilanordnungen, verglichen auch in seinem Arbeitsprinzip, als neu gekennzeichnet werden kann und eine längere Lebensdauer mit höherer Betriebssicherheit aufweist.

Weitere Merkmale der Erfindung sind anhand sechs Figuren näher erläutert, die Magnetventile gemäß dem Stand der Technik bzw. der Erfindung darstellen. In der Zeichnung zeigen:
- Figur 1: einen typischen Ausschnitt einer Magnetventilanordnung gemäß dem Stand der Technik;
- Figur 2: einen schematischen Schnitt durch ein Magnetventil gemäß einer ersten vorteilhaften Ausführungsform der Erfindung;
- Figur 3: einen schematischen Schnitt durch ein Magnetventil gemäß einer zweiten vorteilhaften Ausführungsform der Erfindung;
- Figur 4: eine Perspektivzeichnung des Ventilglieds des Magnetventils aus Figur 3;
- Figur 5: schematisch und im größeren Maßstab die Anordnung des Ventilglieds des Magnetventils aus Figur 3 in Ruhestellung, d.h. im geschlossenen Zustand des Magnetventils, und
- Figur 6: einen Schnitt durch eine weitere mögliche Ausführungsform des Ventilglieds des Magnetventils aus Figur 3.

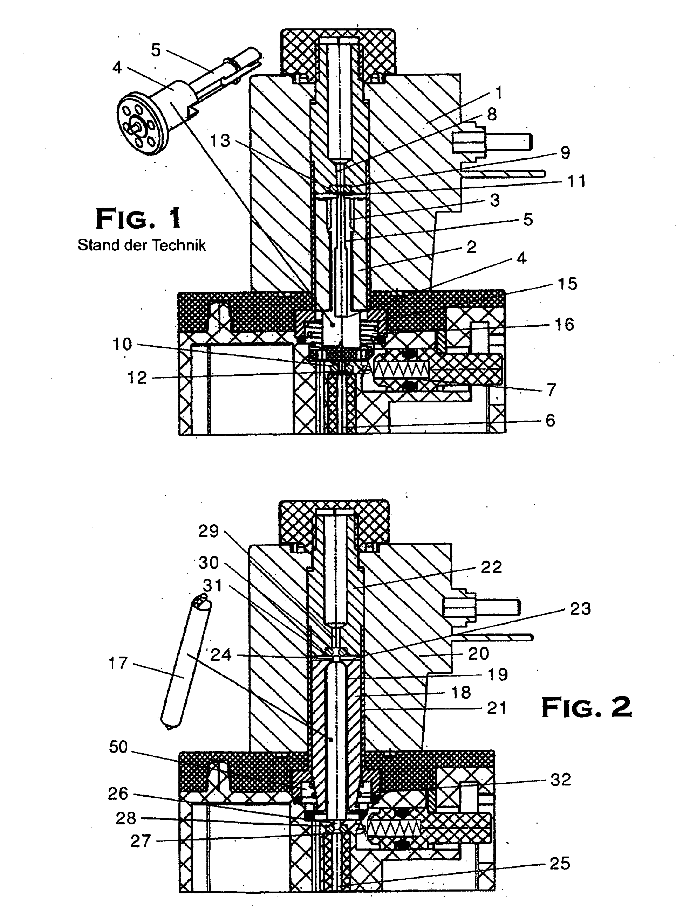

Figur 1 zeigt einen bekannten, zum Stand der Technik gehörenden und als typisch betrachteten Vorgänger des erfindungsgemäßen Magnetventils. Die Teildarstellung zeigt einen im Inneren einer Spule 1 eines nur teilweise dargestellten Elektromagneten angeordneten Anker 2 und einen Schaft 5 eines Ventilglieds 4, der in einen inneren Kanal 3 des Ankers 2 eingeführt und mit dem Anker 2 verbunden ist. Das in eine Überströmkammer eingesetzte Ventilglied 4 ist an seinem unteren Ende mit einem Dichtsitz 7 eines Einlasskanals 6 und an seinem oberen Ende mit einem Dichtsitz 9 eines Abblaskanals 8 über jeweils eine seiner Schließflächen 10 temporär verbunden, wobei die Begriffe "unteres Ende" und "oberes Ende" auf die Ausrichtung der Figur 1 bezogen sind. Wie ersichtlich, sind je ein O-Ring in dem Dichtsitz 7 und dem Dichtsitz 9 eingelassen, die gemeinsam mit den jeweils von einem Fortsatz gebildeten Schließflächen 10, 11 für das Öffnen und Schließen des Einlasskanals 6 und des Abblaskanals 8 sorgen. Am unteren Teil des Ventilglieds 4 ist eine umlaufender Schulter ausgebildet, die ein erstes Ende einer Feder 16 stützt, deren zweites Ende sich in einer Sackbohrung 15 in dem Boden des Elektromagneten abstützt. Aufgabe der Feder 16 ist es, das Ventilglied 4 des Magnetventils in die Ruhestellung - auch als Ausgangsstellung genannt - zurückzustellen, wenn die Erregung des Magnets nicht mehr vorhanden ist, um dadurch den Einlasskanal 6 mittels der Schließfläche 10 des Ventilglieds 4, die in den O-Ring 12 im Dichtsitz 7 eintaucht, abzusperren. Bei der Erregung des Elektromagneten zieht der durch die Spule 1 erzeugte Fluss den Anker 2 nach oben (bezogen auf Figur 1) und der Anker 2 zieht das Ventilglied 4 mit sich. Die obere Schließfläche 11 bzw. der zylindrische Fortsatz des Ventilglieds 4 taucht in den Dichtsitz 9, genauer gesagt in den O-Ring 13 im Dichtsitz 9 ein und sperrt dadurch in bekannter Weise den sonst offenen Abblaskanal 8 ab.

Auf Grund des oben geschilderten Aufbaus und Betriebs ist ersichtlich, dass der Elektromagnet, genauer der Anker 2 des Elektromagneten und die Feder 16 das Ventilglied 4 im Betrieb derart bewegen, dass nicht gewährleistet ist, dass die Längsachse des Ventilglieds 4 mit der Symmetrieachse der Dichtsitze 7, 9, genauer gesagt mit der Symmetrieachse der in den Dichtsitzen 7, 9 einsitzenden O-Ringe 12, 13, in jedem Zeitpunkt zusammenfällt. Das hat zur Folge, dass die Schließflächen 10, 11, d.h. die zylindrischen Fortsätze, während ihrer Bewegung auf die inneren Flächen der O-Ringe 12, 13 aufschlagen und die lateralen Krafteinwirkungen und Stöße im schlimmsten Fall einen schnellen Ausfall und in jedem Fall einen vorzeitigen und asymmetrischen Abrieb und Verschleiß der O-Ringe 12, 13 verursachen.

Diese Nachteile werden durch die Erfindung beseitigt.

Wie aus der Figur 2 ersichtlich, die einen Schnitt durch eine bevorzugte Ausführungsform des erfindungsgemäßen Magnetventils darstellt, ist ein bei dieser Ausführungsform verwendetes Ventilglied 17 ein langgestrecktes zylindrisches Formteil mit zweckmäßigerweise zumindest ungefähr konstantem Durchmesser, das sich in einem inneren Kanal 19 eines Ankers 18 frei axial bewegen, d.h. verschieben kann.

In für einen Fachmann naheliegender Weise können jene Teile des Magnetventils, die von der Erfindung nicht betroffen sind, derart ausgeführt werden, wie auf dem Fachgebiet üblich, und insbesondere der in Figur 1 beschriebenen Weise, deshalb wurden hier die Aufzählung, Erläuterung und Betriebsdarstellung der bezüglich der Erfindung unwesentlichen Bauteile und Baueinheiten zwecks Vereinfachung der Beschreibung weggelassen. Abgesehen von der Ausgestaltung des beweglichen Ankers und des diesbezüglich beweglichen Ventilgliedes kann der Ventilaufbau demjenigen aus Figur 1 entsprechen.

Wie in der Figur 2 ersichtlich, schnellt ein in einer Hülse 21 innerhalb einer Spule 20 eines Elektromagneten geführt bewegbar angeordneter Anker 18 infolge der Erregung des Elektromagneten ausgehend von seiner gezeigten Ruhestellung mit hoher Geschwindigkeit nach oben, wodurch ein in der Ruhestellung des Ankers 18 zwischen dem Anker 18 und einem weiteren, im Inneren der Spule 20 oben angeordneten feststehenden Ankerteil 22 bestehender Spalt 23 geschlossen bzw. durch den oberen Teil des Ankers 18 ausgefüllt wird. Da der Anker 18 an seinem oberen Ende eine Öffnung aufweist, die nur die Durchführung einer an einem axialen Fortsatz ausgebildeten oberen Schließfläche 24 des Ventilglieds 17 erlaubt, und der sich anschließende Teil des Ventilglieds 17 nicht nach oben aus dem Anker 18 austreten kann, übt der Anker 18, der infolge der Erregung auf den Boden des Ankerteils 22 mit hoher Geschwindigkeit aufschlägt, keine nach unten gerichtete Druckkraft mehr auf das obere Ende des Ventilglieds 17 über dessen äußeren umlaufenden Schulterbereich aus. Demzufolge schleudert der in dem Einlasskanal 25 herrschende Druck des fluidischen Mediums das Ventilglied 17 aus seiner Ruhestellung nach oben und eine untere Schließfläche 26 des Ventilglieds 17, d.h. beim Ausführungsbeispiel ein in der Figur sichtbarer unterer zylindrischer Fortsatz, rutscht aus dem Inneren des in einem Dichtsitz 27 angeordneten abdichtenden O-Ringes 28 heraus und gibt den Einlasskanal 25 frei. Kurz darauf taucht dann das obere Ende des Ventilglieds 17 mit der Schließfläche 24, d.h. mit dem oberen zylindrischen Fortsatz in den in einem Dichtsitz 30 eines Abblaskanals 29 angeordneten abdichtenden O-Ring 31 ein und verstopft den Abblaskanal 29.

Beim Umschalten des Ankers 18 nach oben in seine Arbeitsstellung wird auch die Kraft der das Ventilglied 17 in seine Ruhestellung zurückstellenden Feder 32 überwunden.

In naheliegender Weise kann ein ausreichendes Strömungsausmaß z.B. durch geeignete Wahl des Strömungsquerschnitts des Kanals 19 und des Querschnitts des Ventilglieds 17, oder mittels einer nicht dargestellten, längs des Ventilglieds 17 verlaufenden Nut für die Förderung des Hochdruckmediums, oder in anderer bekannten Weise gewährleistet werden.

Die vorteilhaften Eigenschaften des erfindungsgemäßen Magnetventils kommen in Verbindung mit dem dargestellten Bewegungsablauf des Ventilglieds 17 zum Vorschein. Das Ventilglied 17 wird durch den sich nach oben bewegenden Anker 18 nicht mitgeschleppt, da das Ventilglied 17 sich gegebenenfalls mit gewissem Spiel im Kanal 19 des Ankers 18 frei bewegen kann. Das Ventilglied 17, das in der Praxis aus leichtem, starrem Material, z.B. aus auf dem Fachgebiet üblichem Kunststoff hergestellt wird, bewegt sich unabhängig von der Bewegung des Ankers 18 völlig frei nach oben in Richtung auf den Dichtsitz 30. Zu Beginn seiner Bewegung gibt das Ventilglied 17 den Dichtsitz 27 des Einlasskanals 25 frei und das über den Einlasskanal 25 einströmende Hochdruckmedium tritt einerseits über einen in der Figur 2 nicht eingezeichneten Auslasskanal aus und gelangt andererseits über den Ringspalt zwischen dem Ventilglied 17 und dem Anker 18 mit hoher Strömungsgeschwindigkeit zum Abblaskanal 29. Diese Strömung reißt mit und positioniert das Ventilglied 17 und dessen obere Schließfläche 24 wie in der Einführung dargelegt derart, dass die Schließfläche 24, d.h. der obere zylindrische Fortsatz des Ventilglieds 17 genau in die Mitte des O-Ringes 31 sozusagen "schwebend" eingeführt wird, wobei der zylindrische Fortsatz völlig gleichmäßig in das Innere des O-Ringes 31 eintaucht und die innere Wand des O-Ringes 31 nicht beschädigt wird , nicht übermäßig deformiert wird und nicht asymmetrisch verschleißt. Wie erwähnt, verursachen eben diese Einwirkungen bei den Magnetventilen des Standes der Technik die vorzeitige Abnutzung und die damit verbundene häufigere Ersetzung der in den Dichtsitzen eingesetzten ringförmigen Dichtungen.

Beim Absperren, wenn keine Erregung mehr vorhanden ist, fällt der Anker 18 - besonders in einer, in der Figur dargestellten senkrechten Lage - in seine Ruhestellung zurück, was auch durch die Rückstellkraft der zweckmäßigerweise vorhandenen Feder 32 verstärkt wird. Während dieser Rückstellbewegung schleppt das obere, engere Ende des Ankers 18 auch das innerhalb des Ankers 18 angeordnete Ventilglied 17 derart mit, dass es ausschließlich an dessen oberem Ende, im Bereich der äußeren Schulter des im Inneren des Ankers 17 mit gewissem Spiel angeordneten Ventilglieds 17, zu einer Krafteinwirkung auf das Ventilglied 17 kommt und auf das dem Einlasskanal 25 zugeordnete untere Ende des Ventilglieds 17 keine mechanischen Kräfte einwirken. Während der Bewegung des Ventilglieds 17 nach unten nähert sich seine untere Schließfläche 24, d.h. der untere zylindrischer Fortsatz, dem O-Ring 28 in dem Dichtsitz 27 des Einlasskanals 25 an, wodurch jener Querschnitt, über den das Hochdruckmedium aus dem Einlasskanal 25 in die erwähnte Überströmkammer eintreten kann, immer mehr abnimmt. Das hat zur Folge, dass die Geschwindigkeit des Mediumstroms immer mehr zunimmt, und diese Geschwindigkeitszunahme führt dazu, dass die Schließfläche 24 des Ventilglieds 17 durch das mit hoher Geschwindigkeit strömende Medium zentriert mit hoher Genauigkeit in das Innere des O-Ringes 28 eintaucht, was die gleichen Vorteile mit sich bringt, die schon vorher, in Verbindung mit dem Öffnen des Magnetventils, dargestellt wurden.

Auf Grund der Obigen ist es leicht verständlich, dass keine Kräfte auf die Schließflächen 24, 26 des Ventilglieds 17 aus solchen Richtungen einwirken können, die von der Richtung der Längsachse des Ventilglieds 17 abweichen und die den in der dargestellten Ausführungsform zylindrisch ausgestalteten Fortsatz in seitliche Richtungen verdrängen könnten, was erhöhte Beschädigung und/oder Abnutzung der O-Ringe 28,31 in den Dichtsitzen 27,30 zur Folge hätte.

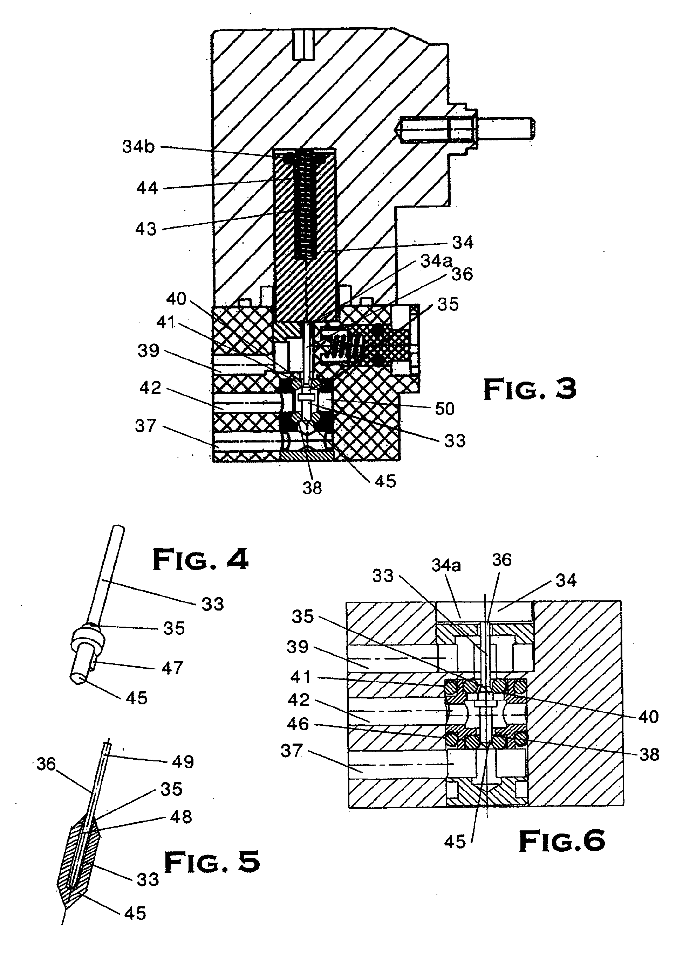

Die Figuren 3 und 6 zeigen zwei veränderte, nur gering voneinander abweichende Ausführungsformen des erfindungsgemäßen Magnetventils, in welchen das Ventilglied 33 nicht im Inneren des Ankers 34 bewegbar angeordnet ist, sondern ein Fortsatz 36, der die obere Schließfläche 35 des Ventilglieds 33 überragt, am unteren Ende 34a des Ankers 34 bevorzugt lose anliegt. Der Betrieb des Ventilglieds 33 ist sonst mit dem Betrieb des Ventilglieds 17 aus der Figur 2 identisch, d.h. der Anker 34 schnellt infolge der Erregung des Elektromagneten nach oben und macht den Weg für das Ventilglied 33 frei, sodass auch der Fortsatz 36 des Ventilglieds 33 sich so weit nach oben verschieben kann, wie es der Anker 34 zulässt. Wie oben erwähnt, bewegt sich der Anker 34 wesentlich schneller als das Ventilglied 33, sodass die Bewegung des Ventilglieds 33 durch die Strömung des über den Dichtsitz 38 des Einlasskanals 37 einströmenden Hochdruckfluidums anstatt direkt durch die momentane Lage des Ankers 34 bestimmt ist. Diese Strömung drückt und versenkt die obere Schließfläche 35 des Ventilglieds 33 in den O-Ring 41 im Dichtsitz 40 des Abblaskanals 39 und sperrt den Strömungsweg auf dieser Weise ab. Das über den Einlasskanal 37 einströmende Medium gelangt dann in die sich anschließende Überströmkammer 50 und verlässt diese Überströmkammer 50 über den Ausströmkanal 42.

Wenn die Erregung des Elektromagneten nicht mehr vorhanden ist, kehrt der Anker 34 durch eine in dem dargestellten Beispiel in seine innere Bohrung 43 eingesetzte Feder 44 in seine Ruhestellung zurück. Im Laufe dieser Bewegung schlägt der Anker 34 auf dem Fortsatz 36 des Ventilglieds 33 auf und beginnt das Ventilglied 33 über diesen Fortsatz 36 in die Schließstellung zu bewegen.

Um eine zuverlässige und unverzügliche Trennung des Ankers 34 von einem die obere Endstellung des Ankers 34 bestimmenden Stator zu bewirken, ist in eine im oberen Ende des Ankers 34 ausgebildeten Ausnehmung zweckmäßigerweise ein Federelement 34b eingesetzt (Figur 3), welches fast völlig in der Ausnehmung versenkt ist und in der dargestellten Ausführungsform durch ein elastisches Element, z.B. einen Gummiring gebildet ist. Wenn die Erregung des Elektromagneten nicht mehr vorhanden ist, überwindet das Federelement 34b die Remanenzkraft, die das obere Ende des Ankers 34 weiterhin in seiner oberen Endstellung festzuhalten wünscht und ruft eine prompte, rasche Rückstellung des Ankers 34 und des Ventilglieds 33 hervor. Diese Wirkung kann in vorbekannter Weise mittels einer zwischen dem Anker 34 und dem Stator angeordneten dünnen Platte aus nichtmagnetischem Material unterstützt werden.

Während der abschließenden Bewegung des Ventilglieds 33 wird die untere Schließfläche 45 des Ventilglieds 33 mittels des über den sich stetig vermindernden Querschnitt des Einlasskanals 37 einströmenden Hochdruckmediums wie bezüglich der Figur 2 beschrieben zentriert in den Dichtsitz 38 des Einlasskanals 37 bzw. in den im Dichtsitz 38 eingesetzten O-Ring 46 eingeführt.

Figur 4 zeigt in vergrößertem Maßstab eine weitere Variante des Ventilglieds 33. Wie ersichtlich, ist hier am Ventilglied 33, in dessen unterem Bereich, eine sich seitlich erstreckende Schulter 47 ausgebildet, deren Aufgabe es ist, im Falle einer Beschädigung oder eines ungewollten Öffnens des geschlossenen Anschlusssystems des Einlasskanals 37 einen Ausstoß des Ventilglieds 33 nach unten durch das über den Auslasskanal 42 eventuell rückschlagende Druckmedium zu verhindern, da dieses z.B. im zerlegten Zustand des Systems zu Unfällen führen kann.

Figur 5 zeigt eine Variante des Ventilglieds 33 aus der Figur 4, wobei der mit dem Anker 34 kooperierende Fortsatz 36 des Ventilglieds 33 nicht mit dem Ventilglied 33 einstückig, d.h. als mit diesem starr verbundenes Bauteil ausgebildet ist. Bei dieser Ausführungsform ist eine innere Bohrung 48 in dem Ventilglied 33 ausgebildet, an dessen oberem Ende die obere Schließfläche 35 und an dessen unterem Ende die untere Schließfläche 45 ausgeformt ist, wobei ein starrer zylindrischer Zapfen 49 in die innere Bohrung 48 insbesondere axial bewegbar eingesetzt ist. Diese Variante hat den zusätzlichen Vorteil, dass die Selbstjustierung der entsprechenden Schließflächen 35, 45 des Ventilglieds 33 unabhängig von der Wirkrichtung der auf den Zapfen 49 ausgeübten Kraft verstärkt gefördert wird.

Bei allen Ausführungsbeispielen liegt die in einen Dichtsitz eingetauchte insbesondere radial außen an einem Zapfen ausgebildete Schließfläche an einer nach radial innen orientierten ringförmigen Dichtfläche des betreffenden Dichtsitzes an, wobei diese Dichtfläche zweckmäßigerweise an einem elastischen O-Ring ausgebildet ist.

Unabhängig von den obigen Ausführungen ist es vorteilhaft, wenn ein erfindungsgemäßes Magnetventil einen mit einem beweglichen Anker 18 ausgestatteten Elektromagnet, einen Einlasskanal 25, 37, einen Auslasskanal 42, eine zwischen dem Einlasskanal 25, 37 und dem Auslasskanal 42 angeordnete Überströmkammer und einen Abblaskanal 29, 39 aufweist und ferner ein mittels des beweglichen Ankers 18 bewegbares Ventilglied 17, 33 enthält, das über mindestens eine bevorzugt zylindrische Schließfläche 26, 45 verfügt, mit der es im geschlossenen Zustand des Magnetventils unter Einnahme einer Schließstellung in einer das Druckmedium zurückhaltenden Weise an einem den Einlasskanal 25, 37 umschließenden ringförmigen Dichtsitz 27, 38 insbesondere radial anliegt. Hierbei ist das Ventilglied 17, 33 bezüglich dem Anker 18, 34 des Elektromagneten gesondert ausgebildet und relativ zu diesem Anker 18, 34 entlang dessen Längsachse axial bewegbar, sodass es an dem Anker 18, 34 axial nur lose anliegt, sodass der Anker 18, 34 beim Schließen des Magnetventils schiebend auf das Ventilglied 17, 33 einwirkt und dieses in die Schließstellung mitnimmt. Beim Öffnen des Magnetventils hebt der Anker 18, 34 wegen seiner hohen Umschaltgeschwindigkeit vorübergehend von dem Ventilglied 17, 33 abhebt, sodass das Ventilglied 17, 33 allein durch das über den Einlasskanal 25, 37 zuströmende Druckmedium in die Offenstellung bewegt wird, wobei es dem Anker 18, 34 zeitverzögert nacheilt. Vorzugsweise ist das Ventilglied 17, 33 dabei bezüglich dem Anker 18, 34 auch zumindest geringfügig radial beweglich, sodass es sich unabhängig vom Anker 18, 34 bezüglich einem mit ihm insbesondere in der Schließstellung kooperierenden Dichtsitz 27, 38 rechtwinkelig zur Längsachse des Ankers ausrichten kann.

Das Ventilglied 17, 33 weist zweckmäßigerweise eine von einer zylindrischen Mantelfläche gebildete Schließfläche 26, 45 auf, die in der Schließstellung in einen einem Dichtsitz 27, 38 zugeordneten O-Ring 28, 46 radial dichtend eintaucht, wobei das Ventilglied 17, 33 zweckmäßigerweise relativ zum Anker 18, 34 in dessen radialer Richtung beweglich ist, sodass es sich mit Bezug auf den O-Ring 28, 46 ausrichten bzw. zentrieren kann.

Insbesondere kann das Magnetventil über ein Ventilglied 17, 33 verfügen, das zwei axial beabstandete, jeweils von einer zylindrischen Mantelfläche gebildete Schließflächen 26, 45; 24, 35 aufweist, deren eine 26, 45 in der Schließstellung radial dichtend in einen dem Einlasskanal 25, 37 zugeordneten ringförmigen Dichtsitz 27, 38 eintaucht und deren andere 24, 35 in der Offenstellung radial dichtend in einen dem Abblaskanal 29, 39 zugeordneten weiteren ringförmigen Dichtsitz 30, 40 eintaucht.

Die in der obigen Beschreibung und der Zeichnung dargestellten Ausführungsformen dienen der besseren Erläuterung des Wesens der Erfindung und begrenzen keineswegs den in den Patentansprüchen definierten Schutzumfang. Für den Fachmann ist naheliegend, dass die dargestellten und erwähnten Ausführungsformen miteinander frei kombinierbar sind bzw. derart verändert werden können, dass die daraus resultierenden Magnetventile den in den Patentansprüchen beanspruchten Schutzumfang nicht verlassen.

## Patentansprüche

1. Elektromagnetisch betätigbares Magnetventil, mit einem Einlasskanal (25), einem Auslasskanal (42), einer zwischen dem Einlasskanal (25) und dem Auslasskanal (42) angeordneten Überströmkammer, einem Abblaskanal (29), ferner einem mittels eines beweglichen Ankers (18) eines Elektromagneten bewegbaren Ventilglied (17), das an einem dem Einlasskanal (25) zugeordneten unteren Ende über eine untere Schließfläche (26) verfügt, mit der es im geschlossenen Zustand des Magnetventils unter Einnahme einer Schließstellung in einer das Druckmedium zurückhaltenden Weise an einem den Einlasskanal (25) umschließenden ringförmigen Dichtsitz (27) anliegt, und das an einem oberen Ende axial beabstandet zu der unteren Schließfläche (26) eine obere Schließfläche (24) aufweist, die in der Offenstellung des Magnetventils an einem den Abblaskanal (29) umschließenden Dichtsitz (30) anliegt, wobei das Ventilglied (17) bezüglich dem Anker (18) des Elektromagneten gesondert ausgebildet, jedoch durch den Anker (18) entlang seiner Längsachse bewegbar angeordnet ist und außerdem das Ventilglied (17) relativ zu diesem Anker (18) entlang dessen Längsachse axial bewegbar und auch zumindest geringfügig radial beweglich ist, wobei das Ventilglied (17) an dem Anker (18) axial lose anliegt, derart, dass der Anker (18) beim Schließen des Magnetventils schiebend auf das Ventilglied (17) einwirkt und dieses in die Schließstellung mitnimmt und beim Öffnen des Magnetventils von dem Ventilglied (17) abhebt, sodass das Ventilglied (17) allein durch das über den Einlasskanal (25) zuströmende Druckmedium, dem Anker (18) nacheilend, in die Offenstellung bewegt wird, **dadurch gekennzeichnet, dass** beide Schließflächen (26, 24) jeweils von einer zylindrischen Mantelfläche eines zylindrischen Zapfens gebildet sind, wobei die untere zylindrische Schließfläche (26) in der Schließstellung und die obere zylindrische Schließfläche (24) in der Offenstellung jeweils radial dichtend in den zugeordneten ringförmigen Dichtsitz (27) eintaucht und an einer nach radial innen orientierten ringförmigen Dichtfläche des betreffenden Dichtsitzes (27, 30) radial anliegt, die an einem elastischen O-Ring ausgebildet ist, wobei die untere Schließfläche (26) des Ventilglieds (17, 33) beim Verlagern in die Schließstellung mittels des die Schließfläche (26) des Ventilglieds (17, 33) umströmenden fluidischen Druckmediums zentriert in den der unteren Schließfläche (26) zugeordneten Dichtsitz (27) geführt wird, und wobei der Anker (18) an seinem dem Abblaskanal (29) zugeordneten oberen Ende eine Öffnung aufweist, die nur die Durchführung des die obere Schließfläche (24) aufweisenden, am oberen Ende des Ventilgliedes (17) angeordneten axialen Zapfens erlaubt, wobei der sich über einen äußeren umlaufenden Schulterbereich anschließende Teil des Ventilgliedes (17) nicht nach oben aus dem Anker (18) austreten kann, wobei der Anker (18) bei seiner Rückstellbewegung in die Schließstellung ausschließlich am oberen Ende im Bereich des äußeren Schulterbereiches auf das Ventilglied (17) einwirkt.

2. Magnetventil nach Anspruch 1, **dadurch gekennzeichnet, dass** die bezüglich dem Einlasskanal (25) konzentrisch angeordnete obere Schließfläche (24, 35) des Ventilglieds (17) beim Verlagern des Ventilglieds (17) in die Offenstellung in dem durch diese Schließfläche (24) abzusperrenden fluidischen Druckmedium schwebend in den Dichtsitz (27) des Abblaskanals (29, 39) zentrisch eintaucht.

3. Elektromagnetisch betätigbares Magnetventil, mit einem Einlasskanal (37), einem Auslasskanal (42), einer zwischen dem Einlasskanal (37) und dem Auslasskanal (42) angeordneten Überströmkammer, einem Abblaskanal (39), ferner einem mittels eines beweglichen Ankers (18) eines Elektromagneten bewegbaren Ventilglied (33), das über eine Schließfläche (45) verfügt, mit der es im geschlossenen Zustand des Magnetventils unter Einnahme einer Schließstellung in einer das Druckmedium zurückhaltenden Weise an einem den Einlasskanal (37) umschließenden ringförmigen Dichtsitz (38) anliegt, wobei das Ventilglied (33) bezüglich dem Anker (34) des Elektromagneten gesondert ausgebildet, jedoch durch den Anker (34) entlang seiner Längsachse bewegbar angeordnet ist und außerdem das Ventilglied (33) relativ zu diesem Anker (34) entlang dessen Längsachse axial bewegbar und auch zumindest geringfügig radial beweglich ist, so dass die Schließfläche (45) des Ventilglieds (33) beim Verlagern in die Schließstellung mittels des die Schließfläche (45) des Ventilgliedes (17, 33) umströmenden fluidischen Druckmediums zentriert in den der Schließfläche (45) zugeordneten Dichtsitz (27, 38) geführt wird, wobei das Ventilglied (33) an dem Anker (34) axial lose anliegt, derart, dass der Anker (34) beim Schließen des Magnetventils schiebend auf das Ventilglied (33) einwirkt und dieses in die Schließstellung mitnimmt und beim Öffnen des Magnetventils von dem Ventilglied (33) abhebt, sodass das Ventilglied (17, 33), dem Anker (18, 34) nacheilend, in die Offenstellung bewegt wird, wobei das Ventilglied (33) zwei axial beabstandete Schließflächen (45; 35) aufweist, deren eine (45) in der Schließstellung radial dichtend in einen dem Einlasskanal (37) zugeordneten ringförmigen Dichtsitz (38) eintaucht und deren andere (35) in der Offenstellung radial dichtend in einen dem Abblaskanal (39) zugeordneten weiteren ringförmigen Dichtsitz (40) eintaucht und wobei das Ventilglied (33) über einen beide Schließflächen (35, 45) überragenden Fortsatz (36) mit dem Ende (34a) des Ankers (34) in Wirkverbindung steht, wobei der Fortsatz (36) lose an dem Ende (34a) des Ankers anliegt, **dadurch gekennzeichnet, dass** die beiden Schließflächen (35, 45) des Ventilgliedes (33) zylindrisch sind und jeder Dichtsitz (38, 40) eine ringförmige, nach radial innen orientierte Dichtfläche aufweist, die an einem O-Ring (41, 46) ausgebildet ist und in die die zugeordnete, von der zylindrischen Mantelfläche eines zylindrischen Zapfens gebildete Schließfläche (35, 45) des Ventilgliedes (34) koaxial eintauchen kann, wobei das Ventilglied (33) allein durch das über den Einlasskanal (37) zuströmende Druckmedium in die Offenstellung bewegt wird.

4. Magnetventil nach Anspruch 3, **dadurch gekennzeichnet, dass** die bezüglich dem Einlasskanal (37) konzentrisch angeordnete weitere Schließfläche (35) des Ventilglieds (33) beim Verlagern des Ventilglieds (33) in die Offenstellung in dem durch diese Schließfläche (35) abzusperrenden fluidischen Druckmedium schwebend in den Dichtsitz (38) eines Abblaskanals (39) zentrisch eintaucht.

5. Magnetventil nach Anspruch 3 oder 4, **dadurch gekennzeichnet, dass** der Fortsatz (36) als ein in einer inneren Bohrung (48) des Ventilglieds (33) bewegbar angeordneter Zapfen (49) ausgebildet ist, der ein Ausweichen des Ventilglieds (33) quer zu seiner Längsachse ermöglicht.

6. Magnetventil nach einem der Ansprüche 1 bis 5, **dadurch gekennzeichnet, dass** am Ventilglied (33) eine Schulter (47) gegen Ausfall angeformt ist.

7. Magnetventil nach einem der Ansprüche 1 bis 6, **dadurch gekennzeichnet, dass** ein Federelement (34b) in dem dem Elektromagneten zugewandten Ende des Ankers (34) eingesetzt ist, das beim Ausschalten der Erregung des Ankers (34) gegen die Remanenzkraft wirkt.

## Claims

1. Electromagnetically actuated solenoid valve, comprising an inlet passage (25), an outlet passage (42), an overflow chamber located between the inlet passage (25) and the outlet passage (42), a blow-off passage (29) and a valve member (17), which is movable by means of a movable armature (18) of a solenoid and which has at a lower end assigned to the inlet passage (25) a lower closing surface (26), with which it bears in the closed state of the solenoid valve, in a way designed to retain the pressure fluid, against an annular seat (27) enclosing the inlet passage (25), and which has at an upper end axially spaced from the lower closing surface (26) an upper closing surface (24), which bears against a seat (30) enclosing the blow-off passage (20) in the open position of the solenoid valve, wherein the valve member (17) is designed separate in respect to the armature (18) of the solenoid but movable by the armature (18) along its longitudinal axis, and wherein the valve member (17) is further axially movable relative to the armature (18) along the longitudinal axis thereof and is at least slightly movable radially as well, wherein the valve member (17) loosely contacts the armature (18) axially in such a way that the armature (18) applies a pushing action to the valve member (17) in the closing process of the solenoid valve, driving it into the closed position, and lifts off the valve member (17) in the opening process of the solenoid valve, so that the valve member (17) is exclusively moved into the open position by the pressure fluid flowing in via the inlet passage (25) while lagging behind the armature (18), **characterised in that** each of the closing surfaces (26, 24) is represented by a cylindrical circumferential surface of a cylindrical pin, wherein the lower cylindrical closing surface (26) dips into the associated annular seat (27) in the closed position and the upper cylindrical closing surface (24) dips into the associated annular seat (27) in the open position, in each case forming a radial seal and radially bearing against a radially inward-oriented annular sealing surface of the respective seat (27, 30), which sealing surface is formed on an elastic O-ring, wherein the lower closing surface (26) of the valve member (17, 33) is, while moving into the closed position, guided into the seat (27) assigned to the lower closing surface (26) in a centred manner by means of the pressure fluid flowing around the closing surface (26) of the valve member (17, 33), and wherein the armature (18) has at its upper end assigned to the blow-off passage (29) an opening which only allows the passage of the axial pin having the upper closing surface (24) and located at the upper end of the valve member (17), wherein the part of the valve member (17) which adjoins via an outer continuous shoulder region cannot emerge in an upwards direction from the armature (18), the armature (18) exclusively acting on the valve member (17) at the upper end in the outer shoulder region during its resetting movement into the closed position.

2. Solenoid valve according to claim 1, **characterised in that** the upper closing surface (24, 35) of the valve member (17), which is arranged concentric with the inlet passage (25), dips centrally into the seat (27) of the blow-off passage (29, 39) while floating in the pressure fluid to be blocked by the said closing surface (24) during the movement of the valve member (17) into the open position.

3. Electromagnetically actuated solenoid valve, comprising an inlet passage (37), an outlet passage (42), an overflow chamber located between the inlet passage (37) and the outlet passage (42), a blow-off passage (39) and a valve member (33), which is movable by means of a movable armature (18) of a solenoid and which has a closing surface (45), with which it bears in the closed state of the solenoid valve, in a way designed to retain the pressure fluid, against an annular seat (38) enclosing the inlet passage (37), wherein the valve member (33) is designed separate in respect to the armature (34) of the solenoid but movable by the armature (34) along its longitudinal axis, and wherein the valve member (33) is further axially movable relative to the armature (34) along the longitudinal axis thereof and is at least slightly movable radially as well, so that the closing surface (45) of the valve member (33) is guided into the associated seat (27, 38) in a centred manner while moving into the closed position by means of the pressure fluid flowing around the closing surface (45) of the valve member (17, 33), wherein the valve member (33) loosely contacts the armature (34) axially in such a way that the armature (34) applies a pushing action to the valve member (33) in the closing process of the solenoid valve, driving it into the closed position, and lifts off the valve member (33) in the opening process of the solenoid valve, so that the valve member (17, 33) is moved into the open position while lagging behind the armature (18, 34), wherein the valve member (33) has two axially spaced sealing surfaces (45; 35), of which one (45) dips into an annular seat (38) assigned to the inlet passage (37) in the closed position and the other (35) dips into a further annular seat (40) assigned to the blow-off passage (39) in the open position, in each case forming a radial seal, and wherein the valve member (33) is actively connected to the end (34a) of the armature (34) via an extension (36) projecting beyond both closing surfaces (35, 45), the extension (36) being in loose contact with the end (34a) of the armature, **characterised in that** the two closing surfaces (35, 45) of the valve member (33) are cylindrical and each seat (38, 40) has an annular, inward-oriented sealing surface which is formed on an O-ring (41, 46) and into which can dip the associated closing surface (35, 45) of the valve member (33) represented by the cylindrical circumferential surface of a cylindrical pin, the valve member (33) being exclusively moved into the open position by the pressure fluid flowing in via the inlet passage (37).

4. Solenoid valve according to claim 3, **characterised in that** the further closing surface (35) of the valve member (33), which is arranged concentric with the inlet passage (37), dips centrally into the seat (38) of a blow-off passage (39) while floating in the pressure fluid to be blocked by the said closing surface (35) during the movement of the valve member (33) into the open position.

5. Solenoid valve according to claim 3 or 4, **characterised in that** the extension (36) is designed as a pin (49), which is arranged movably in an inner bore (48) of the valve member (33) and which facilitates a diversion of the valve member (33) at right angles to its longitudinal axis.

6. Solenoid valve according to any of claims 1 to 5, **characterised in that** a shoulder (47) is formed on the valve member (33) to prevent its falling out.

7. Solenoid valve according to any of claims 1 to 6, **characterised in that** a spring element (34b), which acts against the remanence force when the excitation of the armature (34) is discontinued, is installed into the end of the armature (34) which faces the solenoid.

## Revendications

1. Electrovanne pouvant être actionnée de manière électromagnétique, comprenant un canal d'entrée (25), un canal de sortie (42), une chambre de trop-plein disposée entre le canal d'entrée (25) et le canal de sortie (42), un canal de décharge (29), en outre un organe de vanne (17) pouvant être déplacé au moyen d'un induit mobile (18) d'un électroaimant, lequel dispose d'une surface de fermeture inférieure (26) au niveau d'une extrémité inférieure associée au canal d'entrée (25), par laquelle surface de fermeture ledit organe de vanne repose au niveau d'un siège étanche (27) de forme annulaire entourant le canal d'entrée (25), en prenant une position de fermeture de manière à retenir le milieu de pression lorsque l'électrovanne est fermée, et qui présente, au niveau d'une extrémité supérieure, de manière espacée axialement par rapport à la surface de fermeture inférieure (26), une surface de fermeture supérieure (24), qui repose au niveau d'un siège étanche (30) entourant le canal de décharge (29) lorsque l'électrovanne est ouverte, sachant que l'organe de vanne (17) est réalisé de manière séparée par rapport à l'induit (18) de l'électroaimant, est toutefois disposé de manière à pouvoir être déplacé par l'induit (18), le long de son axe longitudinal, et sachant par ailleurs que l'organe de vanne (17) peut être déplacé de manière axiale par rapport audit induit (18) le long de son axe longitudinal et est mobile également au moins de manière légèrement radiale, sachant que l'organe de vanne (17) repose de manière axialement lâche au niveau de l'induit (18) de telle manière que l'induit (18) agit, lors de la fermeture de l'électrovanne, de manière coulissante sur l'organe de vanne (17) et entraîne ce dernier dans la position de fermeture et le retire, lors de l'ouverture de l'électrovanne, de l'organe de vanne (17) de sorte que l'organe de vanne (17) est déplacé dans la position d'ouverture uniquement par le flux du milieu de pression entrant par le canal d'entrée (25), de manière à être déphasé en arrière par rapport à l'induit (18), **caractérisée en ce que** les deux surfaces de fermeture (26, 24) sont formées respectivement par une surface enveloppante cylindrique d'un tourillon cylindrique, sachant que la surface de fermeture (26) inférieure cylindrique et la surface de fermeture (24) supérieure cylindrique s'enfoncent respectivement, la première dans la position de fermeture et la seconde dans la position d'ouverture, respectivement dans le siège étanche (27) de forme annulaire associé tout en assurant l'étanchéité de manière radiale et qu'elles reposent au niveau d'une surface étanche, de forme annulaire, orientée vers l'intérieur radialement, du siège étanche (27, 30) concerné, laquelle surface étanche est réalisée au niveau d'un joint torique élastique, sachant que la surface de fermeture (26) inférieure de l'organe de vanne (17, 33) est guidée de manière centrée dans le siège étanche (27) associé à la surface de fermeture (26) inférieure au moyen du milieu de pression fluidique circulant autour de la surface de fermeture (26) de l'organe de vanne (17, 33) lors du déplacement dans la position de fermeture, et sachant que l'induit (18) présente, au niveau de son extrémité supérieure associée au canal de décharge (29), une ouverture, qui permet uniquement le passage du tourillon axial présentant la surface de fermeture (24) supérieure, disposé au niveau de l'extrémité supérieure de l'organe de vanne (17), sachant que la partie, se raccordant par l'intermédiaire d'une zone d'épaulement périphérique extérieure, de l'organe de vanne (17) ne peut sortir de l'induit (18) vers le haut, sachant que l'induit (18) agit sur l'organe de vanne (17) lors de son déplacement de retour dans la position de fermeture exclusivement au niveau de l'extrémité supérieure, à proximité de la zone d'épaulement extérieure.

2. Electrovanne selon la revendication 1, **caractérisée en ce que** la surface de fermeture (24, 35) supérieure, disposée de manière concentrique par rapport au canal d'entrée (25), de l'organe de vanne (17) s'enfonce de manière centrée dans le siège étanche (27) du canal de décharge (29, 39) tout en flottant dans le milieu de pression fluidique devant être bloqué par ladite surface de fermeture (24) lors du déplacement de l'organe de vanne (17) dans la position d'ouverture.

3. Electrovanne pouvant être actionnée de manière électromagnétique, comprenant un canal d'entrée (37), un canal de sortie (42), une chambre de trop-plein disposée entre le canal d'entrée (37) et le canal de sortie (42), un canal de décharge (39), en outre un organe de vanne (33) pouvant être déplacé au moyen d'un induit (18) mobile d'un électroaimant, lequel organe de vanne dispose d'une surface de fermeture (45), par laquelle ce dernier repose au niveau d'un siège étanche (38) de forme annulaire entourant le canal d'entrée (37) en adoptant une position de fermeture de manière à retenir le milieu de pression lorsque l'électrovanne est fermée, sachant que l'organe de vanne (33) est réalisé de manière séparée par rapport à l'induit (34) de l'électroaimant, est toutefois disposé de manière à pouvoir être déplacé par l'induit (34) le long de son axe longitudinal et est mobile également au moins de manière légèrement radiale de sorte que la surface de fermeture (45) de l'organe de vanne (33) est guidée de manière centrée dans le siège étanche (27, 38) associé à la surface de fermeture (45), au moyen du milieu de pression fluidique circulant autour de la surface de fermeture (45) de l'organe de vanne (17, 33) lors du déplacement dans la position de fermeture, sachant que l'organe de vanne (33) repose de manière lâche axialement au niveau de l'induit (34) de telle manière que l'induit (34) agit de manière coulissante sur l'organe de vanne (33) lors de la fermeture de l'électrovanne et entraîne ce dernier dans la position de fermeture et le retire de l'organe de vanne (33) lors de l'ouverture de l'électrovanne, de sorte que l'organe de vanne (17, 33) est déplacé dans la position d'ouverture de manière à être déphasé en arrière par rapport à l'induit (18, 34), sachant que l'organe de vanne (33) présente deux surfaces de fermeture (45 ; 35) espacées axialement, l'une (45) s'enfonçant, dans la position de fermeture, dans un siège étanche (38) de forme annulaire associé au canal d'entrée (37) tout en assurant l'étanchéité radialement et l'autre (35) s'enfonçant, dans la position d'ouverture, dans un autre siège étanche (40) de forme annulaire associé au canal de décharge (39) tout en assurant l'étanchéité radialement, et sachant que l'organe de vanne (33) se trouve en liaison fonctionnelle avec l'extrémité (34a) de l'induit (34) par l'intermédiaire d'un prolongement (36) dépassant les deux surfaces de fermeture (35, 45), sachant que le prolongement (36) repose de manière lâche au niveau de l'extrémité (34a) de l'induit, **caractérisée en ce que** les deux surfaces de fermeture (35, 45), de l'organe de vanne (33) sont cylindriques, et **en ce que** chaque siège étanche (38, 40) présente une surface étanche de forme annulaire, orientée vers l'intérieur radialement, laquelle est réalisée au niveau d'un joint torique (41, 46) et dans laquelle peut s'enfoncer de manière coaxiale la surface de fermeture (35, 45) associée, formée par la surface enveloppante cylindrique d'un tourillon cylindrique, de l'organe de vanne (34), sachant que l'organe de vanne (33) est déplacé dans la position d'ouverture seulement par le flux du milieu de pression entrant par le canal d'entrée (37).

4. Electrovanne selon la revendication 3, **caractérisée en ce que** l'autre surface de fermeture (35) disposée de manière concentrique par rapport au canal d'entrée (37), de l'organe de vanne (33) s'enfonce dans le siège étanche (38) d'un canal de décharge (39) tout en flottant dans le milieu de pression fluidique devant être bloqué par ladite surface de fermeture (35) lors du déplacement de l'organe de vanne (33) dans la position d'ouverture.

5. Electrovanne selon la revendication 3 ou 4, **caractérisée en ce que** le prolongement (36) est réalisé sous la forme d'un tourillon (49) disposé de manière à pouvoir être déplacé dans un alésage (48) intérieur de l'organe de vanne (33), lequel tourillon rend possible un écartement de l'organe de vanne (33) de manière transversale par rapport à son axe longitudinal.

6. Electrovanne selon l'une quelconque des revendications 1 à 5, **caractérisée en ce qu'**un épaulement (47) empêchant toute défaillance est formé au niveau de l'organe de vanne (33).

7. Electrovanne selon l'une quelconque des revendications 1 à 6, **caractérisée en ce qu'**un élément formant ressort (34b) est inséré dans l'extrémité, tournée vers l'électroaimant, de l'induit (34), qui agit contre la force de rémanence lors de la désactivation de l'excitation de l'induit (34).
